**Europäisches Patentamt**

**European Patent Office**

**Office européen des brevets**

(11) Numéro de publication: **0 210 933**
**B1**

# (12) FASCICULE DE BREVET EUROPEEN

(45) Date de publication du fascicule du brevet:
23.05.90

(51) Int. Cl.⁵: **G01F 15/18**

(21) Numéro de dépôt: **86420001.9**

(22) Date de dépôt: **06.01.86**

(54) **Borne d'équipement autorisant la lecture à distance des consommations d'eau sur les compteurs.**

(30) Priorité: **26.07.85 FR 8511820**

(43) Date de publication de la demande:
**04.02.87 Bulletin 87/6**

(45) Mention de la délivrance du brevet:
**23.05.90 Bulletin 90/21**

(84) Etats contractants désignés:
**AT CH DE GB IT LI LU NL SE**

(56) Documents cités:
**EP-A- 0 061 908**
**EP-A- 0 125 010**
**BE-A- 442 660**
**FR-A- 2 532 672**
**FR-A- 2 567 173**
**GB-A- 1 066 506**
**US-A- 4 516 794**

**PATENT ABSTRACTS OF JAPAN,**
**vol. 9, no. 113 (P-356)[1836], 17 mai 1985; &**
**JP-A-60 1526 (TOKYO GAS K.K.) 07-01-1985**

(73) Titulaire: **Bonnet, Jean-Claude, 2 chemin des Arcis**
**Espaly, F-43000 Le Puy(FR)**
Titulaire: **Chapuis, Bernard, Chemin du Cros Mons,**
**F-43000 Le Puy(FR)**

(72) Inventeur: **Bonnet, Jean-Claude, 2 chemin des Arcis**
**Espaly, F-43000 Le Puy(FR)**
Inventeur: **Chapuis, Bernard, Chemin du Cros Mons,**
**F-43000 Le Puy(FR)**

(74) Mandataire: **Dupuis, François, Cabinet Charras 3 Place**
**de l'Hôtel-de-Ville, F-42000 St.Etienne(FR)**

## Description

L'objet du Brevet se rattache aux secteurs techniques du contrôle de consommation d'eau et équipements nécessaires pour avoir accès au compteur.

On rappelle, comme décrit dans une Demande de Brevet n° FR-A 2 532 672 aux noms des demandeurs que la borne se présente sous la forme d'un coffret étanche susceptible d'être enterré, définissant une partie enfouie et une partie apparente hors sol; ladite partie enfouie comprend une chambre inférieure située dans le fond du coffret, dans laquelle sont disposés des moyens relatifs à la distribution et la régulation d'eau, et au-dessus de laquelle sont disposés des blocs d'isolation; la partie hors sol présentant un volume pour autoriser l'introduction et l'enlèvement desdits blocs, et une chambre supérieure aménagée pour recevoir des moyens de commande à distance de la distribution et régulation d'eau, et des moyens autorisant la lecture à distance du comptage de consommation d'eau.

A partir de cette conception de base, on a voulu étendre et améliorer les caractéristiques de façon à avoir un accès au compteur d'eau par un organe approprié en vue de son démontage et remontage pour des interventions diverses. Compte tenu de l'importance de hauteur de la partie enterrée dans le sol, et conséquemment de la profondeur à laquelle est situé le compteur, il a fallu concevoir une embase spéciale pour ledit compteur susceptible de coopérer avec une partie complémentaire d'un organe de manœuvre actionnable à partir de l'extérieur de la borne. On a voulu également améliorer, la lecture à distance du comptage de consommation d'eau.

On cite par ailleurs au titre de la règle 27 (1) (c) de la CBE, les brevets EP 0 125 010, US 4 516 794.

Dans ce but la borne d'équipement se présente sous forme d'un coffret étanche avec une partie enterrée et une partie apparente, le fond du coffret étant équipé d'ouvertures latérales pour le passage et la liaison des canalisations d'arrivée (4) et d'évacuation (5) de l'eau avec les moyens nécessaires à sa régulation et sa distribution et comprenant une porte de visite, un compteur (1) étant fixé sur une embase support (31) de manière démontable d'un socle d'appui branché entre lesdites canalisations (4–5), ladite embase et ledit socle présentant des canaux intérieurs (31c–31d), (30a–30b) en communication d'une manière étanche – la borne est caractérisée en ce que l'embase support (31) présente dans sa partie inférieure une chambre (31b) apte à se centrer sur une portée (30c) circulaire formée à la face de dessus du socle (30), des agencements complémentaires (31a–30d) établis dans ladite chambre et sur ladite portée autorisant l'assemblage rapide de l'embase support sur le socle, et en ce que l'embase-support (31) présente dans sa partie supérieure un bossage (31e) de réception du compteur (1), des conduites (32–33) d'entrée et de sortie du compteur étant reliées aux canaux (31c–31d) formés dans l'embase-support, et en ce que l'embase-support (31) présente radialement et en débordement des doigts (34) profilés destinés à coopérer avec les échancrures (35a) formées en bout des griffes (35b) d'un organe de manœuvre conformé en section pour coiffer l'ensemble du compteur, et actionnable à partir de la partie apparente du coffret, pour assurer le démontage ou montage à distance de l'ensemble du compteur et son retrait.

L'invention est exposée ci-après plus en détail à l'aide des dessins qui représentent seulement un mode d'exécution.

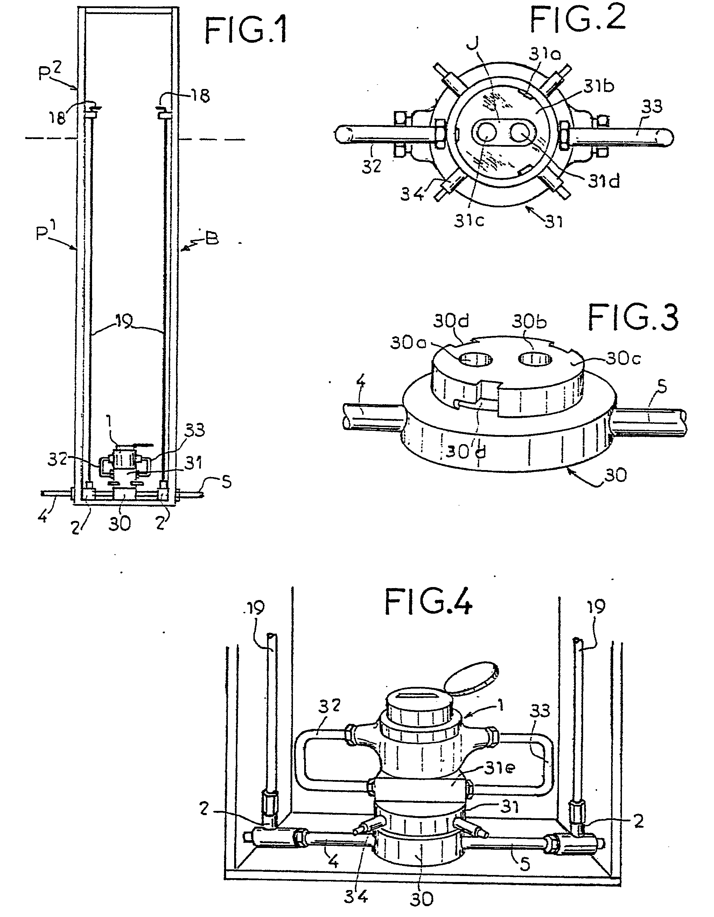

La figure 1 est une vue de face et en coupe de la borne selon les caractéristiques de l'Addition.

La figure 2 est une vue de dessous des agencements particuliers du compteur.

La figure 3 est une vue en perspective du socle d'appui.

La figure 4 est une vue en perspective de l'ensemble du compteur et de ses équipements montés dans le fond du caisson.

La figure 5 est une vue en perspective de l'organe de manœuvre susceptible de coopérer avec le compteur pour son démontage.

La figure 6 est une vue partielle et en coupe montrant l'adaptation de l'organe de manœuvre sur la partie correspondante du compteur. On a illustré en traits mixtes, le retrait de l'ensemble du compteur d'eau après son déverrouillage du socle.

La borne (B) sous forme d'un coffret (3) comprend une partie (P1) enterrée et une autre partie (P2) apparente. Le coffret présente dans sa partie inférieure, sensiblement au-dessus de son fond, des ouvertures latérales pour le passage des canalisations d'eau d'arrivée (4) et de départ (5) avec les moyens nécessaires à la régulation et la distribution d'eau, tel que robinet ou vanne d'arrêt (2). Le compteur d'eau (1) est branché entre les canalisations (4) et (5).

Le compteur (1) est relié à une embase support (31) agencée pour être accouplée, d'une manière démontable, avec un socle (30) positionné dans le fond du caisson (3) entre les conduites (4) et (5) pour y être relié. Le socle (30) présente deux canaux internes séparés (30a) et 30b), en communication respectivement avec les conduites (4) et (5).

Une portée circulaire (30c) est formée concentriquement à la face de dessus du socle et présente périphériquement des agencements (30d) susceptibles de coopérer avec des agencements complémentaires (31a) que présente l'alésage d'une chambre (31b) formée dans l'embase support (31) et destinée à se centrer sur ladite portée (30c) en vue du positionnement et indexation de ladite embase. Par exemple, les agencements (31a) sont constitués par des languettes disposées angulairement à 120°, tandis que les agencements (30d) sont des lumières étranglées à baïonnette.

Le fond de la chambre (31b) de l'embase support (31) présente, en correspondance avec les canaux (30a) et (30b) du socle (30) deux canaux (31c) et (31d) reliés par des conduites (32) et (33) respectivement à l'entrée et à la sortie du compteur d'eau (1). Des joints d'étanchéité (J) sont convenablement montés en relation avec les canaux (30a–30b) et (31c–31d) pour assurer un accouplement parfaitement étanche entre l'embase (31) et le socle (30). A noter que l'embase support (31) présente en débordement un bossage (31e) pour faire office d'appui au compteur (1). Les canalisations (32) et (33) d'entrée et sortie du compteur, sont reliés d'une manière étanche au bossage (31e) pour être en communication avec les canaux (31c) et (31d).

On conçoit donc, lorsque l'embase support (31) équipée du compteur (1) est accouplée d'une manière étanche sur le socle (30), que les canalisations d'amenée et de départ d'eau (4) et (5) sont normalement interceptées par le compteur (1).

Le système d'accouplement à baïonnette (30d) et (31a) permet un montage et démontage rapides du compteur (1) avec son embase (31) par rapport au socle (30). Dans ce but, l'embase (31) présente radialement et en débordement, des doigts cylindriques épaulés (34) destinés à coopérer avec des échancrures complémentaires (35a) formées en bout de griffes (35h) relatives à une tête de manœuvre (35) qui coiffe l'ensemble de compteur. Cette tête de manœuvre est reliée à un organe de préhension (35c) sous forme d'une tige verticale actionnable à partir de l'ouverture que présente la partie débordante hors sol de la borne.

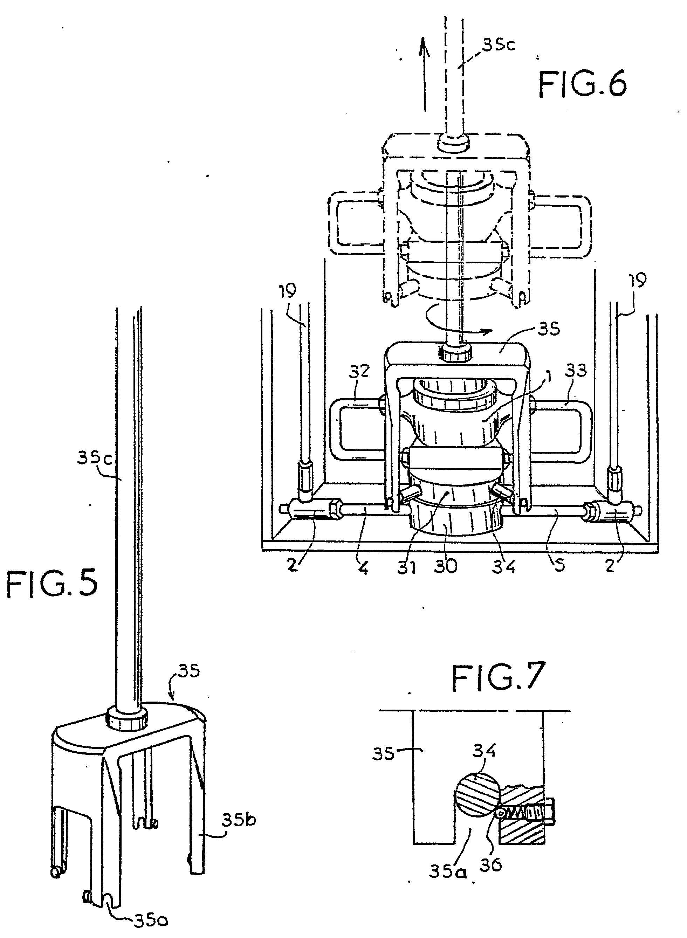

Comme le montre plus particulièrement la figure 5, chaque griffe (35b) présente transversalement dans son épaisseur, une bille de retenue (36) qui apparaît en débordement de l'échancrure correspondante (35a), cette bille étant assujettie à un système de ressort (37) afin d'être escamotée temporairement sous un effort d'appui. La profondeur de chaque échancrure est déterminée de façon à ce qu'après engagement de la tête de manœuvre (35) et positionnement des griffes (35b) par rapport aux doigts d'indexation (34), les billes (36) après avoir été escamotées par lesdits doigts (34) se retrouvent en position débordante sous ces derniers afin d'assurer l'accouplement de ladite tête de manœuvre avec l'ensemble du compteur. Ou bien les billes (36) peuvent coopérer en position d'accouplement avec des empreintes complémentaires formées sur les doigts.

Les robinets ou vannes d'arrêt (2) en amont et en aval du compteur (1), dans le fond du caisson, sont associés par une tige de liaison (19), à un volant de commande (18) afin d'agir à distance sur l'ouverture et la fermeture des robinets (2) pour isoler à volonté le socle (30) et par conséquent l'ensemble du compteur (1) en vue de son démontage. A cet effet, il convient de procéder de la manière suivante.

Par l'ouverture de la face apparente de la borne, on engage à l'intérieur du caisson, au moyen de la tige (35c), la tête de manœuvre (35) qui coiffe l'ensemble du compteur pour que les échancrures (35a) des griffes (35b) coopèrent avec les doigts (34) de l'embase support (31). On exerce un effet d'appui sur la tête (35) de façon à ce que les billes de retenues (36) échappent les doigts (34) en vue d'assurer l'accouplement en hauteur de la tête (35) par rapport à l'embase (31). On agit ensuite angulairement sur la tête de manœuvre (35) afin de désaccoupler le système à baïonnette (31a–30d). Il suffit alors de retirer en hauteur l'ensemble du compteur avec l'embase (31) qui est maintenue clipsé au moyen de billes de retenue (36) qui coopèrent avec les doigts (34). Pour le remontage du compteur (1) et de son embase support (31), on opère de façon inverse.

Il· en résulte que l'on opère, pour le montage du compteur, d'une manière axiale sans risque de porte à faux. L'embase support (31) en combinaison avec le socle (30), présente des moyens d'indexation appropriés pour le montage du compteur d'eau, dans le bon sens.

D'une manière connue, la borne demeure équipée d'un dispositif de lecture optique du cadran du compteur d'eau avec moyen de grossissement de la lecture et moyen d'éclairage éventuellement.

Le système optique de lecture est intégré dans la porte de visite de la borne en partie supérieure du coffret de sorte qu'à l'ouverture de cette porte, l'organe de lecture dégage complètement le volume de la partie supérieure de la borne afin d'autoriser le passage de l'organe de manœuvre (35) relatif à l'ensemble démontable (31). Le système de lecture optique proprement dit est réalisé à partir d'un monoculaire intégré à la porte de visite et conformé pour grossir et éclairer à partir d'une lampe de poche dont le faisceau lumineux est dirigé sur la tête d'un compteur.

Le système optique et d'éclairage peut éventuellement utiliser un jeu de miroirs de renvoi.

On souligne que l'embase (31), compte-tenu de sa conception permet une inclinaison du plan de la tête de lecture du compteur par rapport à un plan horizontal.

**Revendications**

1. Borne d'équipement sous forme d'un coffret étanche avec une partie enterrée et une partie apparente, le fond du coffret étant équipé d'ouvertures latérales pour le passage et la liaison des canalisations d'arrivée (4) et d'évacuation (5) de l'eau avec les moyens nécessaires à sa régulation et sa distribution et comprenant une porte de visite, un compteur (1) étant fixé sur une embase support (31) de manière démontable d'un socle d'appui branché entre lesdites canalisations (4–5), ladite embase et ledit socle présentant des canaux intérieures (31c–31d), (30a–30b) en communication d'une manière étanche, caractérisée en ce que l'embase support (31) présente dans sa partie inférieure une chambre (31b) apte à se centrer sur une portée (30c) circulaire formée à la face de dessus du socle (30), des agencements complémentaires (31a–30d) établis dans ladite chambre et sur ladite portée autorisant l'assemblage rapide de l'embase support sur le socle, et en ce que l'embase-support (31) présente dans sa partie supérieure un bossage (31e) de réception du compteur (1), des conduites (32–33) d'entrée et de sortie du compteur étant reliées aux canaux (31c–31d) formés dans l'embase-support, et en ce que l'embase-support (31) présente radialement et en débordement des doigts (34) profilés destinés à coopérer avec les échancrures (35a) formées en bout des griffes (35b) d'un organe de manœuvre conformé en section pour coiffer l'ensemble du compteur, et actionnable à partir de la partie apparente du coffret, pour assurer le démontage ou montage à distance de l'ensemble du compteur et son retrait.

2. Borne selon la revendication 1, caractérisée en ce que la portée circulaire (30c) est formée concentriquement à la face de dessus du socle et présente périphériquement des agencements sous forme de lumières étranglées à baïonnettes (30d) susceptibles de coopérer avec les agencements complémentaires (31a) sous forme de languettes que présente l'alésage de la chambre (31b) formée dans l'embase support (31) et conformée pour être centrée et indexée coaxialement à ladite portée.

3. Borne selon la revendication 1, caractérisée en ce que chaque griffe (35b) est équipée de moyens de retenue débouchant dans les échancrures correspondantes et susceptibles de coopérer avec les doigts cylindriques (34) en vue d'assurer l'accouplement de la tête de manœuvre (35) avec l'ensemble du compteur équipé de l'embase (31).

4. Borne selon la revendication 1, caractérisée en ce que le système optique de lecture est intégré dans la porte de visite en partie supérieure du coffret afin de dégager lors de l'ouverture de ladite porte, le volume de la partie supérieure de la borne pour autoriser le passage de l'organe de manœuvre (35).

5. Borne selon la revendication 1, caractérisée en ce que le système de lecture optique résulte de l'intégration dans la porte de visite d'un monoculaire grossissant et d'éclairage dont le faisceau lumineux est dirigé sur la tête du compteur, ledit système optique et d'éclairage pouvant ou non utiliser un jeu de miroirs de renvoi.

**Claims**

1. Equipment terminal in the form of a sealed casing with a sunken portion and a visible portion, the bottom of the casing being provided with lateral openings for the passage therethrough and the connection of feed pipings (4) and drain pipings (5) for the water together with the necessary means for the regulation and the distribution thereof, and including an inspection door, a meter (1) being secured in a detachable manner on a supporting bed-plate (31) of a base of abutment connected between said pipings (4–5), said bed-plate and said base being provided with inner channels (31c–31d), (30a–30b) intercommunicating in a sealed manner, the device being characterized in that the supporting bed-plate (31) is provided at the lower part thereof with a chamber (31b) capable of centering itself on a circular bearing surface (30c) formed on the upper face of the base (30), additional arrangements (31a–30d) being provided in said chamber and on said bearing surface for permitting the quick assembly of the supporting bed-plate on the base, said device being also characterized in that the supporting bed-plate (31) is provided in the upper part thereof with a boss (31e) for accommodating the meter (1), the meter inlet and outlet ducts (32–33) being connected to the channels (31c–31d) formed within the supporting base, and the device being moreover characterized in that the supporting base (31) is provided radially and in a protruding manner with contoured fingers (34) intended for cooperating with the cut-outs (35a) formed at the end portions of the claws (35b) of an operating organ which is sectionally arranged for covering the meter assembly, and which can be actuated from the visible part of the casing for the remote dismantling or mounting of the meter assembly, and for taking down the same.

2. Terminal as claimed in Claim 1, characterized in that the circular bearing surface (30c) is formed concentrically to the upper face of the base, and is provided peripherically with arrangements in the form of narrowed bayoned ports (30d) capable of co-operating with the complementary arrangements (31a) in the form of small tongues provided in the bore of the chamber (31b) formed within the supporting bed-plate (31) and designed to be centered and indexed coaxially to said bearing surface.

3. Terminal as claimed in Claim 1, characterized in that each claw (35b) is equipped with retaining means which emerge the corresponding cut-outs and are capable of co-operating with the cylindrical fingers (34) in order to provide the coupling of the operational head (35) with the assembly of the meter equipped with the bed-plate (31).

4. Terminal as claimed in Claim 1, characterized in that the reading optical system is integrated within the inspection door in the upper part of the casing, in order to disengage, when said door is opened, the volume of the upper part of the terminal for the passage of the operating organ (35).

5. Terminal as claimed in Claim 1, characterized in that the reading optical system is the result of the integration, within the inspection door, of a magnificating and lighting single eyepiece the light rays of which are directed towards the head of the meter, with a reflecting mirror set which may be used or not used with said lighting system and optical system.

**Patentansprüche**

1. Als ein abgedichtetes Gehäuse mit einem vergrabten Gehäuseteil und einem sichtbaren Gehäuseteil gebildete Ausstättungsklemme, in welcher der Boden des Gehäuses seitliche Öffnungen für das Durchlassen und den Anschluß der Zuführungsrohrleitung (4) und der Ablaßrohrleitung (5) für das Wasser mit den für die Regulierung und die Verteilung des Wassers erforderlichen Einrichtungen sowie mit einer Besichtigungstür aufweist, wobei ein Zähler (1) auf eine Tragplatte (31) abnehmbar montiert ist, die mit einem zwischen den besagten Rohrleitungen (4–5) verbundenen Abstützungsuntersatz festgemacht wird, wobei die besagte Tragplatte und der besagte Untersatz mit innenseitigen, in abgedichteter Weise in Verbindung stehenden Gerinnen (31c–31d), (30a–30b) versehen ist, dadurch gekennzeichnet, daß die Tragplatte (31) auf deren Unterteil eine Kammer (31b) aufweist, die auf einer an der Unterseite des Untersatzes (30) vorgesehenen kreisförmigen Auflage (30c) zentrierfähig ist, wobei die in der besagten Kammer und auf der besagten Auflage befindlichen, ergänzenden Einrichtungen (31a–30d) den schnellen Zusammenbau der Tragplatte auf den Untersatz ermöglichen; daß die Tragplatte (31) in deren Oberteil einen Fortsatz (31e) zur Aufnahme des Zählers (1) aufweist, wobei die Rohrleitungen (32–33) zum Eingang in den Zähler und zum Ausgang aus dem Zähler mit den in der Tragplatte gebildeten Gerinnen (31c–31d) verbunden sind; und daß die Tragplatte (31) die in radialer Richtung vorstehenden, profilierten Finger (34) aufweist, die zum Mitwirken mit den am Ende der Klauen (35b) eines Betätigungsorgans gebildeten Ausschnitten (35a) vorgesehen sind, wobei dieses Betätigungsorgan in dessen Querschnitt zum Überdecken des gesamten Zählers ausgeführt wird, und von dem sichtbaren Gehäuseteil aus betätigbar ist, damit das Zerlegen oder das Montieren des gesamten Zählers, sowie dessen Wegnahme, aus der Ferne durchgeführt werden kann.

2. Ausstattungsklemme gemäß Anspruch 1, dadurch gekennzeichnet, daß die kreisförmige Auflage (30c) konzentrisch zu der Oberseite des Untersatzes ausgebildet ist, und als verjüngte Bajonettöffnungen (30d) gebildete Einrichtungen auf dem Umfang aufweist, die mit den als Zünglein gebildeten zusätzlichen oder ergänzenden Einrichtungen (31a) zusammenarbeiten können, die in der Bohrung der Kammer (31b) vorgesehen sind, die in der Tragplatte (31) gebildet und zur gleichachsigen Teilung und Zentrierung zur besagten Auflage ausgeführt ist.

3. Ausstattungsklemme gemäß Anspruch 1, dadurch gekennzeichnet, daß jede Klaue (35b) mit in die entsprechenden Ausschnitte mündenden Zurückhaltungsmitteln versehen wird, die mit den zylindrischen Fingern (34) zusammenwirken können, um die Kupplung des Betätigungskopfs (35) mit dem mit der Tragplatte (31) versehenen Zähler zu bewirken.

4. Ausstattungsklemme gemäß Anspruch 1, dadurch gekennzeichnet, daß das optische Verlesensystem in der Besichtigungstür im oberen Gehäuseteil integriert wird, um bei dem Aufmachen der besagten Tür den Raum des Oberteils der Ausstattungsklemme freizumachen, damit das Durchlassen des Betätigungsorgans (35) hindurch ermöglicht wird.

5. Ausstattungsklemme gemäß Anspruch 1, dadurch gekennzeichnet, daß das optische Verlesensystem aus der Integrierung in der Besichtigungstür eines beleuchtenden und vergrößernden Monoculars besteht, dessen Lichtbündel auf den Kopf des Zählers gerichtet wird, wobei ein Reflexionsspiegel mit dem optischen und beleuchtenden System seine Verwendung finden kann oder nicht.

FIG.1

FIG.2

FIG.3

FIG.4

FIG.6

FIG.5

FIG.7